# EUROPEAN PATENT APPLICATION

(11) **EP 3 692 829 A1**
(43) Date of publication of application: **12.08.2020**
(21) Application number: 18824190.5
(22) Date of filing: 25.06.2018
(51) Int. Cl.: A24F 47/00

(54) **ELECTRONIC CIGARETTE AND METHOD FOR PRE-HEATING ELECTRONIC CIGARETTE**

(30) Priority: 26.06.2017 CN 201710497151
(71) Applicant: Changzhou Patent Electronic Technology Co., Ltd, Changzhou, Jiangsu 213125 (CN)
(72) Inventor: QIU, Weihua, Changzhou Jiangsu 213125 (CN)
(74) Representative: Zaboliene, Reda
(86) International application number: PCT/CN2018/092631
(87) International publication number: WO 2019/001386

(57) **Abstract**

Disclosed are an electronic cigarette and a method for pre-heating an electronic cigarette. The method comprises: initialising an electronic cigarette; acquiring and/or invoking a pre-heating parameter of the electronic cigarette; according to the acquired or invoked pre-heating parameter of the electronic cigarette, controlling an atomisation apparatus of the electronic cigarette so that same performs pre-heating; and starting the electronic cigarette and smoking with same. By means of the electronic cigarette and the method for pre-heating an electronic cigarette disclosed in the present invention, an atomisation apparatus of the electronic cigarette is controlled to perform pre-heating by setting a pre-heating parameter of the electronic cigarette, wherein the pre-heating power and pre-heating time of the electronic cigarette are controllable, and a user has an intense experience.

## Description

### TECHNICAL FIELD

The disclosure relates to the technical field of electronic cigarettes, and more particularly, to an electronic cigarette and a method for pre-heating the electronic cigarette.

### BACKGROUND

Due to the increasing concerns about human health and environment safety, consumers are conscious of the great threats of the cigarette to human body, therefore, a product named "electronic cigarette" is brought up. The electronic cigarette is also known as virtual cigarette or electronic atomizer. It has an appearance same as the cigarette, and has a flavor similar to that of the cigarette, and even has more flavors than that of the cigarette. The electronic cigarette also provides aerosol for user to inhale like that of cigarette, it has a smell and feel similar to cigarette.

The existing electronic cigarette is generally constituted by three parts: a battery module, an atomizer, and a mouthpiece. The existing electronic cigarette turns on the atomizer to atomize the tobacco liquid only when the electronic cigarette is in use. Because in every time, the atomizer is required to heat up the tobacco liquid to an atomization temperature or even higher, the user is required to wait for a period of time, and the power consumption of the battery module is increased. For a long-time use, a large depletion of the battery module is caused, and a poor experience is brought to the user.

### SUMMARY

An object of the disclosure is to provide an electronic cigarette and a method for pre-heating the electronic cigarette, aiming at resolving the large depletion of the battery module in the electronic cigarette, and eliminating the poor experience brought to the user at the same time.

In order to achieve the aforementioned object, a first aspect of the embodiment of the disclosure provides an electronic cigarette. The electronic cigarette includes:
a battery module;
an atomizer; and
a main controller connected to the battery module and the atomizer;
wherein the main controller is configured to acquire a pre-heating parameter via an input module for receiving user input instruction, and/or invoke a preset pre-heating parameter, the main controller is further configured to control the atomizer to perform pre-heating according to the pre-heating parameter.

Further, the user input instruction includes user operation instruction and data input instruction. The user operation instruction includes initialization instruction, pre-heating instruction and inhalation instruction of the electronic cigarette. The data input instruction includes inputted pre-heating parameter. The main controller performs an initialization of the electronic cigarette after receiving the initialization instruction, controls the atomizer to perform pre-heating after receiving the pre-heating instruction, and starts the electronic cigarette for inhalation after receiving the inhalation instruction.

Further, the pre-heating parameter includes pre-heating power/voltage, and/or, pre-heating time. The pre-heating power/voltage is any value within the range of the output power/voltage of the electronic cigarette, or is any setting among multiple pre-heating power/voltage settings. The pre-heating time is any value within the range of a preset time period, or is any setting among multiple pre-heating time settings.

Further, the main controller is further configured to save the pre-heating parameter of the electronic cigarette inputted through the input module. When the main controller does not receive an input of the pre-heating parameter, the previously saved pre-heating parameter is invoked as the current pre-heating parameter of the electronic cigarette by the main controller.

Further, the atomizer of the electronic cigarette includes a liquid storage assembly and an atomizing assembly. A liquid storage chamber is provided in the liquid storage assembly. The atomizing assembly includes an atomizing head. A heating member and an atomizing chamber are provided in the atomizing head. The atomizing assembly forms an air intake passage outside the atomizing head, the air intake passage is in communication with the atomizing chamber.

Further, the preset pre-heating parameter includes pre-heating control information of the electronic cigarette. The pre-heating control information includes a corresponding relation between a temperature of a heating member and a pre-heating action. When the temperature of the heating member is less than a preset temperature, the main controller controls the heating member to pre-heat until the temperature of the heating member is equal to or greater than the preset temperature.

Further, the main controller is further configured to adjust a pre-heating power according to a temperature difference between a real-time temperature of the heating member and the preset temperature.

Further, the air intake passage is provided with an air intake auxiliary heating member for heating the air in the air intake passage. The air intake passage includes an air inlet hole and an air outlet hole. The air inlet hole is provided with an air inlet temperature sensor for detecting the air temperature in the air inlet hole, and the air outlet hole is provided with an air outlet temperature sensor for detecting the air temperature in the air outlet hole.

Further, the preset pre-heating parameter includes pre-heating control information of the electronic cigarette. The pre-heating control information includes a corresponding relation between a temperature in the air outlet hole and a pre-heating action. When the temperature in the air outlet hole is less than a preset temperature, the main controller controls the air intake auxiliary heating member to pre-heat the air entering the atomizer until the temperature in the air outlet hole is equal to or greater than the preset temperature.

Further, the pre-heating control information includes a corresponding relation between a temperature difference between the air inlet hole and the air outlet hole and a pre-heating power of the air intake auxiliary heating member. When the temperature difference between the air inlet hole and the air outlet hole is decreased, the pre-heating power is also decreased.

Further, the liquid storage chamber is provided with a tobacco liquid auxiliary heating member for heating the tobacco liquid and a tobacco liquid temperature sensor for detecting the temperature of the tobacco liquid.

Further, the preset pre-heating parameter includes pre-heating control information of the electronic cigarette. The pre-heating control information includes a corresponding relation between a temperature of the tobacco liquid and a pre-heating action. When the temperature of the tobacco liquid is less than a preset temperature, the main controller controls the tobacco liquid auxiliary heating member to pre-heat the tobacco liquid in the liquid storage assembly until the temperature of the tobacco liquid is equal to or greater than the preset temperature of the tobacco liquid.

In order to achieve the aforementioned object, a second aspect of the embodiment of the disclosure provides a method for pre-heating the electronic cigarette. The method includes:
acquiring and/or invoking a pre-heating parameter of the electronic cigarette; and
controlling an atomizer of the electronic cigarette to perform pre-heating according to the acquired and/or invoked pre-heating parameter of the electronic cigarette.

Further, in the step of acquiring and/or invoking a pre-heating parameter of the electronic cigarette, the pre-heating parameter includes pre-heating power/voltage, and/or, pre-heating time.

Further, the electronic cigarette includes a main controller and an input module connected to the main controller. Acquiring a pre-heating parameter of the electronic cigarette includes acquiring the pre-heating parameter by the main controller when the pre-heating parameter is inputted through the input module. Invoking a pre-heating parameter of the electronic cigarette includes invoking a preset pre-heating control information by the main controller. Acquiring and invoking a pre-heating parameter of the electronic cigarette includes acquiring a portion of the pre-heating parameter inputted through the input module and invoking the pre-heating control information by the main controller to obtain the other portion of the pre-heating parameter.

Further, the atomizer of the electronic cigarette includes a liquid storage assembly and an atomizing assembly. A liquid storage chamber is provided in the liquid storage assembly. The atomizing assembly includes an atomizing head. A heating member and an atomizing chamber are provided in the atomizing head. The atomizing assembly forms an air intake passage outside the atomizing head. The air intake passage is in communication with the atomizing chamber. The air intake passage is provided with an air intake auxiliary heating member for heating the air in the air intake passage. The air intake passage includes an air inlet hole and an air outlet hole. The air inlet hole is provided with an air inlet temperature sensor for detecting the real-time air temperature in the air inlet hole. The air outlet hole is provided with an air outlet temperature sensor for detecting the real-time air temperature in the air outlet hole. The liquid storage chamber is provided with a tobacco liquid auxiliary heating member for heating the tobacco liquid and a tobacco liquid temperature sensor for detecting the real-time temperature of the tobacco liquid.

Further, the pre-heating control information includes at least one of the following corresponding relations: a corresponding relation between a temperature of the heating member and a pre-heating action; a corresponding relation between a temperature of the tobacco liquid and a pre-heating action; a corresponding relation between a temperature in the air outlet hole and a pre-heating action; a corresponding relation between a real-time temperature of the heating member and a pre-heating power of the heating member; a corresponding relation between a real-time temperature of the tobacco liquid and a pre-heating power of the tobacco liquid auxiliary heating member; a corresponding relation between a real-time temperature in the air outlet hole and a pre-heating power of the air intake auxiliary heating member; a corresponding relation between a target temperature of the tobacco liquid and a target temperature in the air outlet hole; a corresponding relation between a target temperature in the air outlet hole, a target temperature of the tobacco liquid and a pre-heating power of the heating member; a corresponding relation between a target temperature in the air outlet hole, a target temperature of the tobacco liquid and a target temperature of the heating member; and a corresponding relation between a temperature difference between the air inlet hole and the air outlet hole and a pre-heating power of the air intake auxiliary heating member.

Further, after receiving an initialization instruction of the electronic cigarette, the main controller automatically invokes the pre-heating parameter of the electronic cigarette and controls the atomizer of the electronic cigarette to pre-heat.

The pre-heating control information includes a corresponding relation between a target temperature of the tobacco liquid and a target temperature in the air outlet hole. The pre-heating method further includes:
determining a target temperature firstly, wherein the target temperature is one of the target temperature of the tobacco liquid and the target temperature in the air outlet hole;
acquiring, by the main controller, the other one of the target temperature of the tobacco liquid and the target temperature in the air outlet hole according to the pre-heating control information; and
controlling the tobacco liquid auxiliary heating member and the air intake auxiliary heating member to heat, until each of the temperature in the air outlet hole and the temperature of the tobacco liquid reaches the target temperature.

Further, the pre-heating control information includes a corresponding relation between a target temperature in the air outlet hole, a target temperature of the tobacco liquid and a target temperature of the heating member. The pre-heating method further includes:
determining a target temperature firstly, wherein the target temperature is one of the three temperatures: the target temperature in the air outlet hole, the target temperature of the tobacco liquid and the target temperature of the heating member; and invoking, by the main controller, the other two temperatures by the main controller according to the pre-heating control information;
or, determining two target temperatures firstly, wherein the two target temperatures are two of the three temperatures: the target temperature in the air outlet hole, the target temperature of the tobacco liquid and the target temperature of the heating member; and invoking, by the main controller, the other one target temperature, according to the pre-heating control information; and
controlling, by the main controller, the air intake auxiliary heating member, the tobacco liquid auxiliary heating member and the heating member to perform pre-heating, and controlling the temperature of the tobacco liquid, the temperature of the heating member and the temperature in the air outlet hole to reach the preset target temperature in the pre-heating control information one by one, or at the same time.

In the electronic cigarette provided by the embodiment of the disclosure, the atomizer of the electronic cigarette is controlled to perform pre-heating according to the pre-heating parameter of the electronic cigarette, so that the pre-heating power and the pre-heating time of the electronic cigarette are controllable, and the user experience is improved.

### BRIEF DESCRIPTION OF THE DRAWINGS

FIG. 1 is a block diagram of an electronic cigarette provided by a first embodiment of the disclosure.
FIG. 2 is a method for pre-heating an electronic cigarette provided by a second embodiment of the disclosure.
FIG. 3 is a flowchart of acquiring a pre-heating parameter and other functional parameter of the electronic cigarette according to the second embodiment of the disclosure.
FIG. 4 is a schematic view of an atomizer of an electronic cigarette provided by a third embodiment of the disclosure.
FIG. 5 is a diagram of a first pre-heating control table of the electronic cigarette provided by the third embodiment of the disclosure.
FIG. 6 is a diagram of a second pre-heating control table of the electronic cigarette provided by the third embodiment of the disclosure.
FIG. 7 is a diagram of a third pre-heating control table of the electronic cigarette provided by the third embodiment of the disclosure.
FIG. 8 is a diagram of a fourth pre-heating control table of the electronic cigarette provided by the third embodiment of the disclosure.
FIG. 9 is a diagram of a fifth pre-heating control table of the electronic cigarette provided by the third embodiment of the disclosure.
FIG. 10 is a diagram of a sixth pre-heating control table of the electronic cigarette provided by the third embodiment of the disclosure.
FIG. 11 is a diagram of a seventh pre-heating control table of the electronic cigarette provided by the third embodiment of the disclosure.
FIG. 12 is a diagram of an eighth pre-heating control table of the electronic cigarette provided by the third embodiment of the disclosure.
FIG. 13 is a diagram of a ninth pre-heating control table of the electronic cigarette provided by the third embodiment of the disclosure.
FIG. 14 is a diagram of a tenth pre-heating control table of the electronic cigarette provided by the third embodiment of the disclosure.
FIG. 15 is a method for pre-heating the electronic cigarette provided by the third embodiment of the disclosure.

To make the objectives, technical solutions, and advantages of the present disclosure clear, the following further describes the embodiments of the present disclosure in detail with reference to the accompanying drawings.

### DETAILED DESCRIPTION OF THE PREFERRED EMBODIMENTS

It should be noted that, the specific embodiments described herein is only for the purpose of illustrating the disclosure, not limited to the disclosure.

Various embodiments of the present disclosure will now be described with reference to the accompanying drawings. In the subsequent description, suffixes such as "module", "component" or "unit" used to represent elements are used only for the description of the disclosure, which has no specific meaning by itself.

### First embodiment

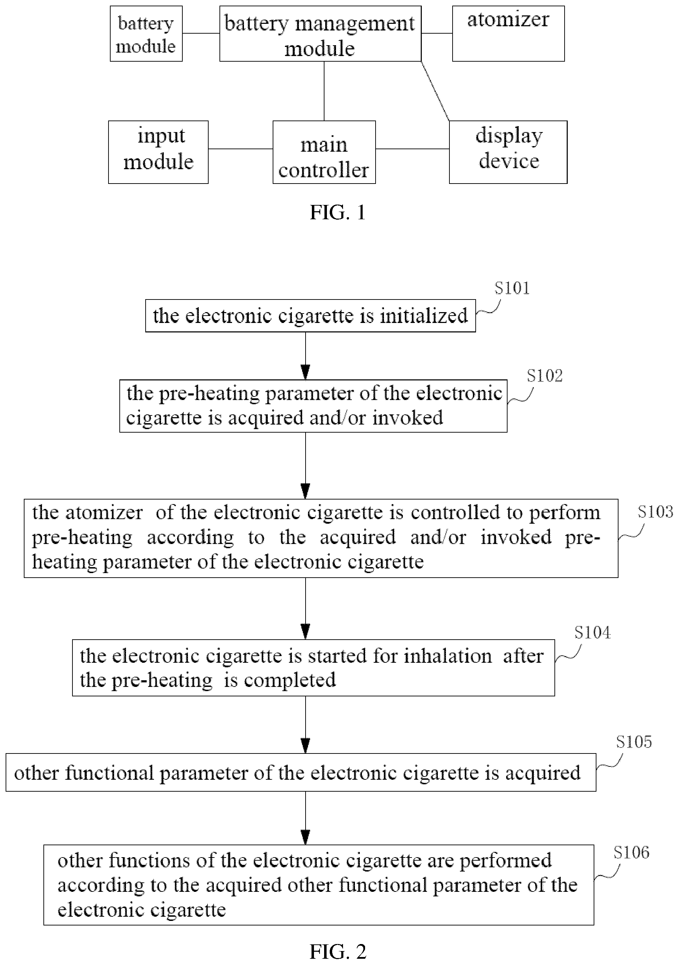

As shown in FIG. 1, in the embodiment, an electronic cigarette is provided. The electronic cigarette includes a main controller, a battery module, a power management module, an atomizer, a display device and an input module. The main controller is connected to the power management module, the display device and the input module. The power management module is connected to the atomizer, the display device and the battery module.

The battery module is configured to supply power to the atomizer, the display device and the battery module of the electronic cigarette through the power management module.

The power management module is configured to control the battery module to distribute the power reasonably to the atomizer, the display device and the battery module.

The atomizer is configured to atomize the tobacco liquid in the electronic cigarette according to the control of the main controller, such that the atomized tobacco liquid is inhaled by the user.

The input module is configured to receive user input instruction, including user operation instruction and data input instruction.

In the embodiment, the input module includes but not limited to a mechanic button or a touch screen. The user operation instruction includes but not limited to initialization instruction of the electronic cigarette, pre-heating instruction, inhalation instruction, etc. In the embodiment, the user operation instruction is the initialization instruction of the electronic cigarette. The user operation instruction can be inputted by a mechanic button (e.g., power switch, pre-heating switch, inhalation switch, plus and minus buttons, selecting button), or can be inputted by a touch screen. The data input instruction includes the input of specific value or the input of setting selection, which is mainly used to set or invoke the pre-heating parameter of the electronic cigarette.

The main controller is configured to determine whether there is a user input instruction from the input module. When there is a user input instruction from the input module, the main controller controls the electronic cigarette to perform a corresponding operation according to the user operation instruction (e.g., performing an initialization of the electronic cigarette according to the switching-on instruction of the power switch), acquires or invokes the pre-heating parameter of the electronic cigarette according to the data input instruction, and controls the atomizer to pre-heat according to the acquired or invoked pre-heating parameter of the electronic cigarette. After the pre-heating is completed or during the pre-heating process, the electronic cigarette is started according to the user operation instruction or started automatically, for the user to inhale. In the embodiment, the electronic cigarette is started automatically by the main controller for the user to inhale after the pre-heating is completed.

It can be understood that in alternative embodiments, the power management module can be omitted. At this case, the main controller is directly connected to the battery module and the input module.

In the embodiment, the pre-heating parameter of the electronic cigarette includes pre-heating power/voltage, and/or, pre-heating time of the heating member of the atomizing head. The pre-heating power/voltage can be any value within the range of the output power/voltage of the electronic cigarette, or can be any setting among multiple pre-heating power/voltage settings. The pre-heating time can be any value within the range of a preset time period, or can be any setting among multiple pre-heating time settings. In a specific embodiment, the range of the preset time period varies from 0.1 second to 2 seconds.

It should be noted that the pre-heating power/voltage, and/or, the pre-heating time can be set according to a combination of aforementioned settings or any value. For example, the pre-heating power/voltage and the pre-heating time are set in each setting, which may include two modes. One mode is that, one pre-heating power/voltage corresponds to one pre-heating time (such as, in a first setting, the pre-heating voltage is 2 volts, the pre-heating time is 0.2 second), such that after the specific setting is selected, the corresponding pre-heating power/voltage and the pre-heating time are constant and cannot be changed. The other mode is that, one pre-heating power/voltage corresponds to multiple pre-heating times (for example, in a first setting, the pre-heating voltage is 2 volts, the pre-heating time is 0.2 second, 0.3 second or 0.4 second), or one pre-heating time corresponds to multiple pre-heating power/voltages (for example, in a first setting, the pre-heating time is 0.2 second, the pre-heating voltage is 2 volts, 2.5 volts or 3 volts), such that after the specific setting is selected, the pre-heating time or the pre-heating power/voltage can be adjusted.

It should be noted that, when the main controller determines whether there is an input operation from the input module, it determines mainly according to whether it receives a data signal transmitted from the input module. If the main controller receives a data signal transmitted from the input module, it determines that there is an input operation from the input module, otherwise it determines that there is no input operation from the input module.

Further, the main controller usually includes a memory, and the memory is used to save the pre-heating parameter of the electronic cigarette set by the input module. It can be understood that the pre-heating parameter of the electronic cigarette set by the input module can be saved by individual memory or other memories.

In one embodiment, the main controller is also configured to take the previously saved pre-heating parameter as the current pre-heating parameter when the input module has no data input (that is, the pre-heating parameter is updated). The main controller controls the atomizer to pre-heat according to the previously saved pre-heat parameter, and the electronic cigarette is started for inhalation after the pre-heating is completed.

Further, the display device is configured to display the main interface of the electronic cigarette after the initialization of the electronic cigarette, and then display corresponding interface according to the user's operation. The information contained in the displayed interface of the display device includes the pre-heating parameter input from the input module and the pre-heating parameter saved by the main controller.

In the embodiment, the display device includes but not limited to an LED display device, an LCD device, or an OLED device, etc.

In the electronic cigarette provided by the embodiment of the disclosure, by setting the pre-heating parameter of the electronic cigarette, the atomizer of the electronic cigarette is controlled to pre-heat, and the electronic cigarette is automatically started for inhalation after the pre-heating. The pre-heating power and the pre-heating time of the electronic cigarette are controllable, and the user experience is improved.

### Second embodiment

As shown in FIG. 2, a method for pre-heating an electronic cigarette is provided in the embodiment, the pre-heating method includes the following steps:
In step S101, the electronic cigarette is initialized;
In step S102, the pre-heating parameter of the electronic cigarette is acquired and/or invoked.

In the embodiment, the acquired pre-heating parameter of the electronic cigarette includes pre-heating power/voltage, and/or, pre-heating time. The pre-heating power/voltage can be any value within the range of the output power/voltage of the electronic cigarette, or can be any setting among multiple pre-heating power/voltage settings. The pre-heating time can be any value within the range of a preset time period, or can be any setting among multiple pre-heating time settings. In a specific embodiment, the range of the preset time period varies from 0.1 second to 2 seconds.

It should be noted that the pre-heating power/voltage, and/or, the pre-heating time can be set according to a combination of aforementioned settings or any value. For example, the pre-heating power/voltage and the pre-heating time are set in each setting, which may include two modes. One mode is that, one pre-heating power/voltage corresponds to one pre-heating time (such as, in a first setting, the pre-heating voltage is 2 volts, the pre-heating time is 0.2 second), such that after the specific setting is selected, the corresponding pre-heating power/voltage and the pre-heating time are constant and cannot be changed. The other mode is that, one pre-heating power/voltage corresponds to multiple pre-heating times (for example, in a first setting, the pre-heating voltage is 2 volts, the pre-heating time is 0.2 second, 0.3 second or 0.4 second), or one pre-heating time corresponds to multiple pre-heating power/voltages (for example, in a first setting, the pre-heating time is 0.2 second, the pre-heating voltage is 2 volts, 2.5 volts or 3 volts), such that after the specific setting is selected, the pre-heating time or the pre-heating power/voltage can be adjusted.

In the embodiment, the pre-heating parameter of the electronic embodiment can be acquired in the following three ways: first, according to the data input of the user; second, when the main controller does not receive the data input of this time, the previously saved pre-heating parameter is automatically invoked as the current pre-heating parameter.

Further, the method for pre-heating the electronic cigarette in the embodiment further includes:
In step S103, the atomizer of the electronic cigarette is controlled to perform pre-heating according to the acquired and/or invoked pre-heating parameter of the electronic cigarette;
In step S104, the electronic cigarette is started for inhalation after the pre-heating is completed.

In the embodiment, if the user does not need to reset the pre-heating parameter of the electronic cigarette during the current operation, the required action only involves pressing the power switch and the inhalation switch of the electronic cigarette. When the power switch is pressed, the electronic cigarette automatically initializes. When the inhalation switch is pressed, the electronic cigarette performs pre-heating automatically, i.e., the main controller invokes the pre-heating parameter directly, and the electronic cigarette is started automatically for inhalation after the pre-heating is completed. When the user needs to reset the pre-heating parameter of the electronic cigarette during the current operation, the data input operation is required after the electronic cigarette is initialized. In one embodiment, after receiving the initialization instruction of the electronic cigarette, the main controller automatically invokes the pre-heating parameter of the electronic cigarette, and controls the atomizer of the electronic cigarette to perform the pre-heating. That is, the electronic cigarette has an automatic pre-heating function. In one embodiment, the pre-heating parameter can be acquired and invoked, an optional way in one embodiment is that: the user selects a pre-heating power via the input module, then a pre-heating control information relevant to the selected pre-heating power is invoked by the main controller, for example, the pre-heating control information includes: when the pre-heating power is maintained for 2 seconds, turn off for 1 second, then pre-heat for another 2 seconds with half of the previous power, and finally end the pre-heating.

It should be noted that the electronic cigarette in the disclosure may further have other functions, for example, wireless transmission function, electrocardiogram monitoring function, infrared temperature measurement function, voice broadcasting function, etc. In order to realize the above functions, corresponding parameter settings need to be carried out in the corresponding interfaces of the electronic cigarette.

In alternative embodiments of the disclosure, the electronic cigarette has other functions, in step S 102 of the pre-heating method of the electronic cigarette of the disclosure, in addition to the pre-heating parameter of the electronic cigarette, other functional parameter of the electronic cigarette need to be further acquired.

Correspondingly, the method for pre-heating the electronic cigarette of the disclosure further includes the following steps:
In step S105: other functional parameter of the electronic cigarette is acquired;
In step S106: other functions of the electronic cigarette are performed according to the acquired other functional parameter of the electronic cigarette.

It should be noted that the steps for performing other functions of the electronic cigarette can be executed before the pre-heating of the electronic cigarette is completed. For example, after the wireless transmission parameter, the electrocardiogram monitoring parameter and the voice broadcasting parameter of the electronic cigarette are set, the wireless transmission function, the electrocardiogram monitoring function and the voice broadcasting function are directly executed. After the electrocardiogram monitoring function is performed, the monitored information can be broadcast by voice or the monitored data can be transmitted to other apparatus or devices by wireless transmission. The steps for performing other functions of the electronic cigarette can also be performed during the pre-heating process or after the pre-heating is completed. For example, during the pre-heating process, the pre-heating temperatures can be broadcast at regular intervals, or "pre-heating is completed, inhalation can be carried out" is broadcast after pre-heating is completed.

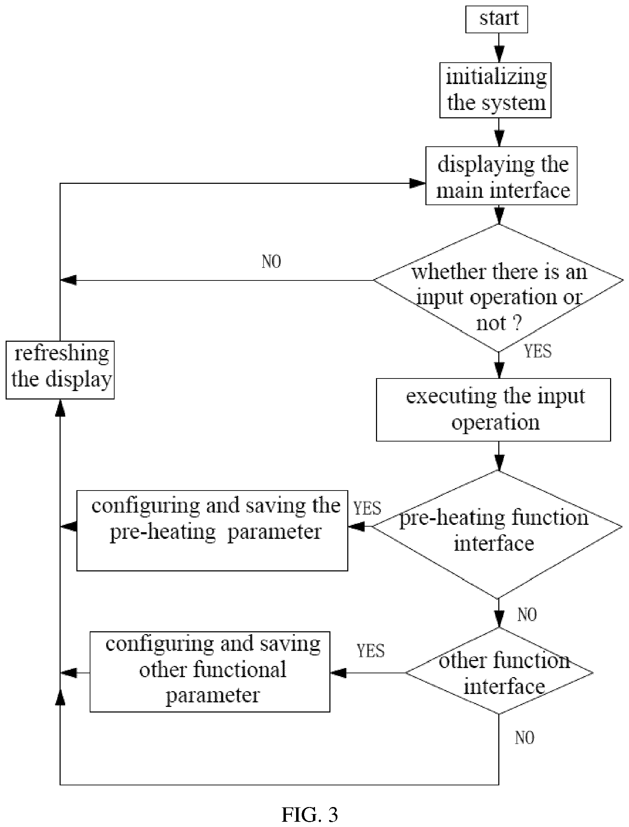

Further, in the step S102 or S105, the specific operation procedure for acquiring pre-heating parameter and other functional parameter of the electronic cigarette can be referred to FIG. 3. As shown in FIG. 3, the acquiring process of pre-heating parameter and other functional parameter of the electronic cigarette as an example includes the following steps:
In step S1: the electronic cigarette is started to work, the system is initialized and shows the main interface.
In step S2: the main interface is detected whether there is an input operation; if there is an input operation, then the input operation is performed and the corresponding function interface is entered according to the input operation; if there is no input operation, the main interface is retained.

In this step, the input operation in the main interface includes the input operation of entering the pre-heating function interface and entering other function interfaces.

In the embodiment, the input operation is performed by the input module, the input module includes mechanic button or touch screen.

In step S3: the pre-heating function interface is detected whether there is an input operation including data input or setting input; if there is an input operation, execute pre-heating parameter setting and saving of pre-heating function interface, then refresh the display and return to the main interface; otherwise, the previously saved pre-heating parameter is invoked as the current pre-heating parameter of the electronic cigarette.

Specifically, if it is detected that there is an input operation in the pre-heating function interface, i.e., the main controller receives the input operation in the pre-heating function interface, it indicates that the user has performed an input operation of setting the pre-heating parameter of the electronic cigarette in the pre-heating function interface, the main controller saves the corresponding pre-heating parameter of the electronic cigarette after receiving the input operation. After the pre-heating parameter of the electronic cigarette is configured, the steps S103 and S104 are executed, i.e., the atomizer is controlled to perform pre-heating according to the configured pre-heating parameter of the electronic cigarette, and the electronic cigarette is started automatically for inhalation after the pre-heating is completed.

If no input operation in the pre-heating function interface is detected, i.e., the main controller does not receive the input operation in the pre-heating function interface, the previously saved pre-heating parameter is invoked as the current pre-heating parameter of the electronic cigarette, the steps S103 and S104 are executed according to the current pre-heating parameter of the electronic cigarette, i.e., the atomizer is controlled to perform pre-heating according to the previously saved pre-heating parameter, and the electronic cigarette is started automatically for inhalation after the pre-heating is completed.

It should be noted that in this step, after the pre-heating parameter of the electronic cigarette is configured, the operation for entering the steps S103 and S104 can be done by clicking the touch screen or by pressing the corresponding button, or a predetermined time period is preset in the main controller, for example, the time period is 10 seconds, if the main controller does not receive a new input operation after the main controller enters the pre-heating function interface or receives an input operation in the pre-heating function interface for the preset time period, then it automatically jumps to a later step, such that the atomizer is controlled by the main controller to perform pre-heating according to the configured pre-heating parameter or the previously saved pre-heating parameter, and the electronic cigarette is started automatically for inhalation after the pre-heating is completed.

Further, in the disclosure, the electronic cigarette may have other functions, for example, wireless transmission function, electrocardiogram monitoring function, infrared temperature measurement function, voice broadcasting function, etc. In alternative embodiments, the setting operation of the working parameter of the electronic cigarette further includes the following steps:
In step S4: other function interface is detected whether there is an input operation, if there is an input operation, execute other functional parameter setting and saving, then refresh the display and return to the main interface; otherwise, the previously saved pre-heating parameter is invoked as the current pre-heating parameter of the electronic cigarette. In the embodiment, other function interface includes but not limited to wireless transmission interface, electrocardiogram monitoring interface, infrared temperature measurement interface, voice broadcasting interface, etc.

Specifically, if it is detected that there is an input operation in the other function interface, i.e., the main controller receives the input operation in the other function interface, it indicates that the user has performed an input operation of setting other functional parameter of the electronic cigarette in the other function interface, the main controller saves the corresponding other functional parameter of the electronic cigarette after receiving the input operation. After the other functional parameter of the electronic cigarette are configured, the step S106 is executed, i.e., the other functions are performed according to the configured other functional parameter of the electronic cigarette.

If no input operation in the other function interface is detected, i.e., the main controller does not receive the input operation in the other function interface, the previously saved other functional parameter of the electronic cigarette is invoked as the current other functional parameter of the electronic cigarette by the main controller, the step S106 is executed according to the current other functional parameter of the electronic cigarette.

In the method for pre-heating the electronic cigarette provided by the embodiment of the disclosure, by setting the pre-heating parameter of the electronic cigarette, the atomizer of the electronic cigarette is controlled to pre-heat, and the electronic cigarette is automatically started for inhalation after pre-heating. The pre-heating power and the pre-heating time of the electronic cigarette are controllable, and the user experience is improved.

### Third embodiment

The embodiment provides an electronic cigarette and a method for pre-heating the electronic cigarette.

The electronic cigarette in this embodiment is similar to the electronic cigarette in the first embodiment, both include a main controller, a battery module, an atomizer and an input module. Further, the electronic cigarette includes a power management module and/or a display device. The function and the connection of the components of the aforementioned electronic cigarette are same as those in the first embodiment, which are not described again. The main difference between the electronic cigarettes provided by this embodiment and the first embodiment is in the structure of the atomizer.

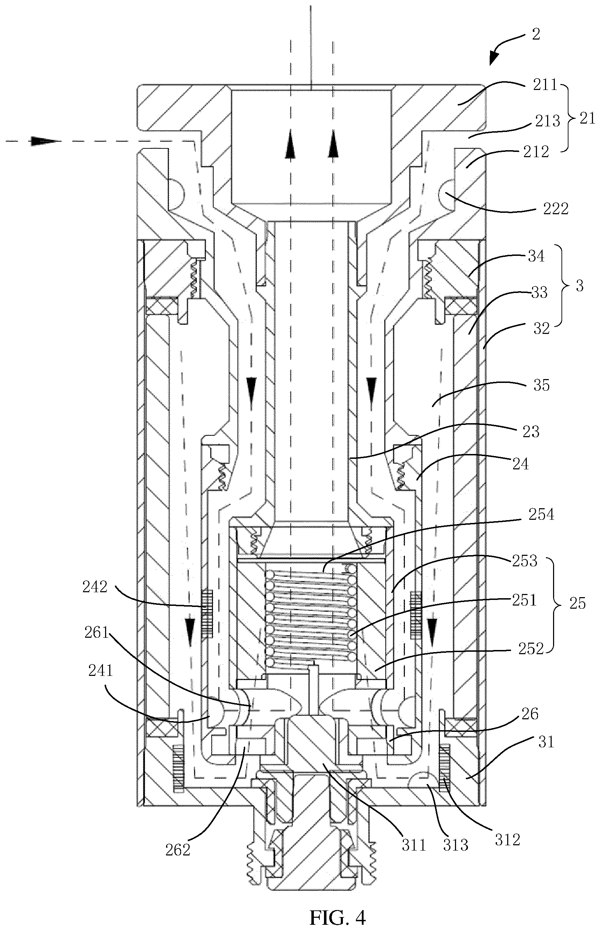

As shown in FIG. 4, the atomizer of the electronic cigarette provided by this embodiment includes an atomizing assembly 2 and a liquid storage assembly 3 having a liquid storage chamber 35. One end of the liquid storage assembly 3 is provided with an opening (not labeled) for injecting tobacco liquid. The atomizing assembly 2 is inserted into the liquid storage assembly 3 from the opening. The atomizer further includes an auxiliary heating member for pre-heating. The auxiliary heating member includes a tobacco liquid auxiliary heating member 312 and an air intake auxiliary heating member 242. The auxiliary heating member is connected to the main controller. It can be understood that both the tobacco liquid auxiliary heating member 312 and the air intake auxiliary heating member 242 include a heater. In one embodiment, the heater is nickel-chrome heating wire. In other embodiments, the heater can also be an electric heating film, etc.

In one embodiment, the atomizing assembly 2 includes a mouthpiece connector 21, a ventilation tube 23, an atomizing head sleeve 24, an atomizing head 25, and an atomizing head mounting base 26. The mouthpiece connector 21 defines an air inlet hole 213, so that the mouthpiece connector 21 is divided into a part located in an inner side of the air inlet hole 213 and a part located in an outer side of the air inlet hole 213, hereinafter named as the internal tubular portion 211 and the external tubular portion 212, respectively. The lower end of the internal tubular portion 211 is fixedly connected to the upper end of the ventilation tube 23. The external tubular portion 212 is located outside the ventilation tube 23, and spaced from the periphery of the ventilation tube 23 to form a passage between the external tubular portion 212 and the ventilation tube 23 for air to pass through. The air inlet hole 213 is provided with an air inlet temperature sensor 222 on the inner wall of the external tubular portion 212. The lower end of the external tubular portion 212 is fixedly connected to the upper end of the atomizing head sleeve 24 by threads. The atomizing head 25 is disposed in the inner space of the atomizing head sleeve 24, and spaced from the atomizing head sleeve 24 to form a passage between the atomizing head 25 and the atomizing head sleeve 24 for the air to pass through. The upper end of the atomizing head 25 is fixedly connected to the lower end of the ventilation tube 23. A middle passage of the ventilation tube 23 is in communication with the outlet of the mouthpiece connector 21, for the user to inhale the smoke via a mouthpiece. The atomizing head mounting base 26 is located on the lower end of the atomizing head 25. The atomizing head mounting base 26 defines an air outlet hole 261 along a radial direction thereof. The atomizing head mounting base 26 further defines a tobacco liquid inlet hole 262 along an axial direction thereof. The inner side of a bottom portion of the atomizing head sleeve 24 is provided with an air outlet temperature sensor 241 corresponding to the air outlet hole 261, and the atomizing head sleeve 24 is provided with an air intake auxiliary heating member 242 corresponding to the middle position of the atomizing head 25, for heating the air entering the atomizing head 25. During air intake, the air enters the passage between the external tubular portion 212 and the ventilation tube 23 from the air inlet hole 213 of the mouthpiece connector 21, then passes through the passage between the atomizing head sleeve 24 and the atomizing head 25, and enters the atomizing head 25 via the air outlet hole 261 of the atomizing head mounting base 26, that is, the atomizer forms an air intake passage between the air inlet hole 213 and the air outlet hole 261 of the atomizing assembly 2. In the embodiment, the air inlet hole 213 at one end of the air intake passage is formed in the mouthpiece connector 21, the air outlet hole 261 at the other end of the air intake passage is formed in the atomizing head mounting base 26. In alternative embodiments, the positions of the air inlet hole 213 and the air outlet hole 261 can be different, as long as the air can flow into the interior of the atomizing head 25 from the outside of the electronic cigarette.

The atomizing head 25 includes a heating member 251, a liquid absorbing member 252, a housing 253 and an atomizing chamber 254. The liquid absorbing member 252 communicates the liquid storage chamber 35 with the atomizing chamber 254 through the tobacco liquid inlet hole 262 in the lower end of the atomizing head mounting base 26, and absorbs the tobacco liquid from the liquid storage chamber 35 for supplying to the heating member 251 in the atomizing chamber 254. After the atomizer is powered on, the heating member 251 heats up and atomizes the tobacco liquid for the user to inhale. The housing 253 encloses the liquid absorbing member 252 and the heating member 251, the upper end of the housing 253 is fixedly connected to the lower end of the ventilation tube 23, and the atomizing head mounting base 26 is disposed on the lower end of the housing 253. The liquid storage assembly 3 includes an atomizer base 31 located below the atomizing head mounting base 26. The atomizer base 31 is provided with an electric connector assembly 311, for electrically connecting the heating member 251 to a battery module or an external power source of the electronic cigarette. The atomizer base 31 is provided with a tobacco liquid auxiliary heating member 312 and a tobacco liquid temperature sensor 313 which are disposed adjacent to the tobacco liquid inlet hole 262 of the atomizing head mounting base 26, for auxiliary heating the tobacco liquid entering the atomizing head 25 and sensing a temperature of the tobacco liquid entering the atomizing head 25. In the embodiment, the tobacco liquid auxiliary heating member 312 and the tobacco liquid temperature sensor 313 are not limited, for example, in one embodiment, the tobacco liquid auxiliary heating member 312 and the tobacco liquid temperature sensor 313 can also be disposed in the atomizing chamber 254. When disposed in the atomizing head 25, the tobacco liquid auxiliary heating member 312 and the tobacco liquid temperature sensor 313 can be disposed adjacent to the tobacco liquid inlet hole 262 or at other positions. In the embodiment, the heating member 251 is a nickel-chrome heating wire, and the liquid absorbing member 252 is a fiber rope. In alternative embodiments, the heating member 251 and the liquid absorbing member 252 can be made of other suitable materials. For convenience, in the following, when there is no "atomizing head" before the "heating member", the "heating member" also indicates the heating member.

Further, the liquid storage assembly 3 further includes an outer supporting casing 32, a glass sleeve 33 and a connector ring 34. The atomizer base 31 is fixed to the lower end of the outer supporting casing 32. The glass sleeve 33 is disposed inside the outer supporting casing 32. The connector ring 34 is fixed to the upper end of the outer supporting casing 32, and is sleeved outside the external tubular portion 212. The liquid storage chamber 35 is formed between the glass sleeve 33 and the external tubular portion 212. In order to observe the residual amount of the tobacco liquid in the atomizer, the outer supporting casing 32 in the embodiment further defines a window (not shown), the tobacco liquid in the atomizer can be observed through the window and the glass sleeve 33, so that the user can determine whether or not to inject tobacco liquid.

In one embodiment, an air intake auxiliary heating member 242 is provided in the air intake passage of the atomizing assembly 2 for heating the air in the air intake passage. An air inlet temperature sensor 222 is provided in the air inlet hole 213 of the air intake passage for detecting the real-time temperature of the air in the air inlet hole 213. An air outlet temperature sensor 241 is provided in the air outlet hole 241 of the air intake passage for detecting the real-time temperature of the air in the air outlet hole. A tobacco liquid auxiliary heating member 312 for heating the tobacco liquid and a tobacco liquid temperature sensor 313 for detecting real-time temperature of the tobacco liquid are provided in the liquid storage chamber 35.

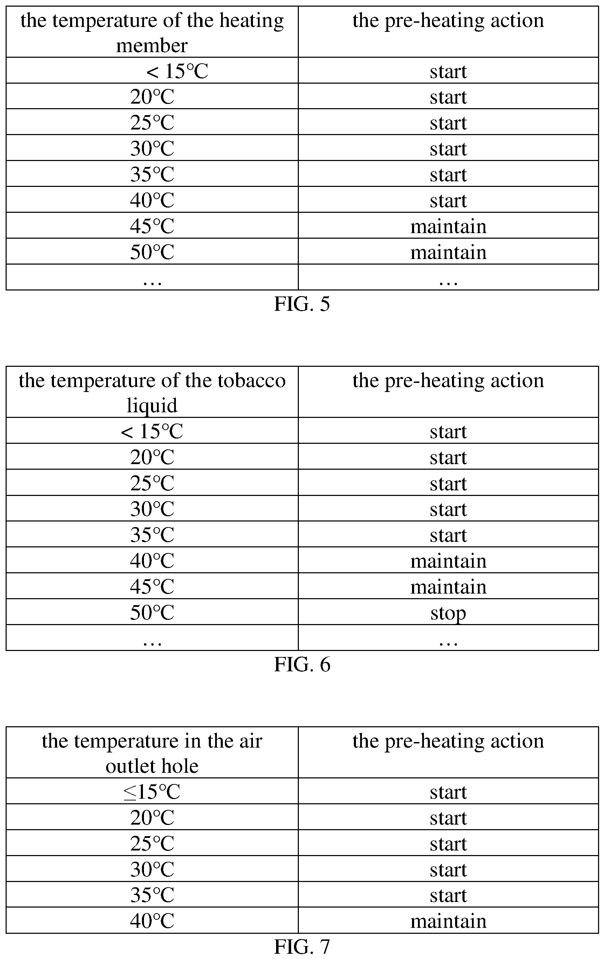

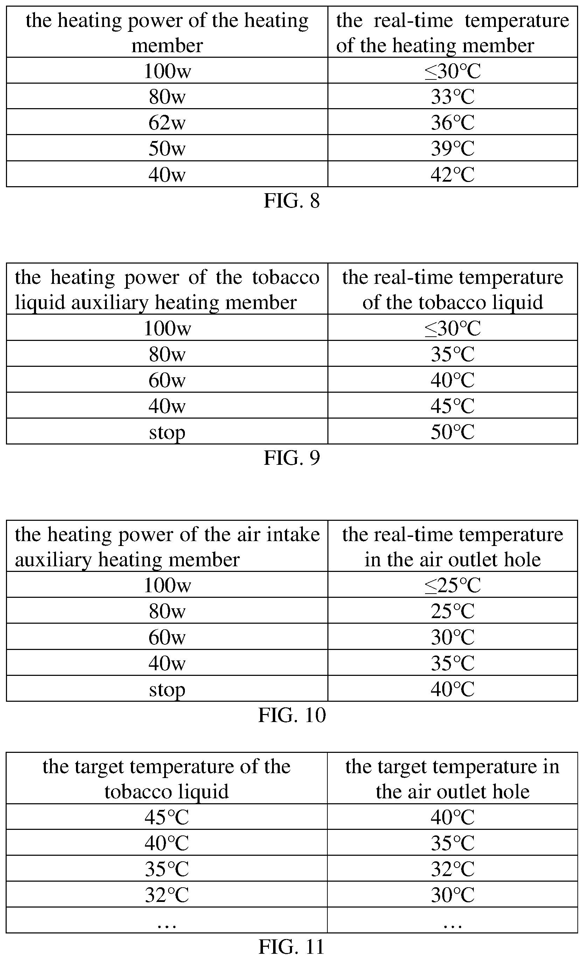

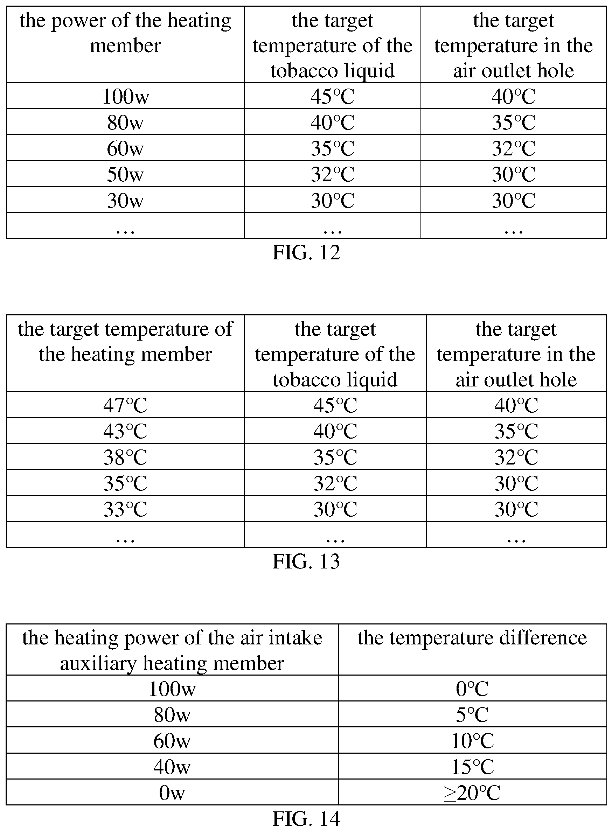

In one embodiment, a pre-heating control information can be preset and stored in the main controller. The pre-heating control information of the electronic cigarette may include at least one of the following corresponding relations: a corresponding relation between a temperature (the temperature is measured by a temperature probe or other instruments) of the heating member and a pre-heating action (as shown in FIG. 5); a corresponding relation between a temperature of the tobacco liquid and a pre-heating action (as shown in FIG. 6); a corresponding relation between a temperature in the air outlet hole and a pre-heating action (as shown in FIG. 7); a corresponding relation between a real-time temperature of the heating member and a pre-heating power of the heating member (as shown in FIG.8); a corresponding relation between a real-time temperature of the tobacco liquid and a pre-heating power of the tobacco liquid auxiliary heating member (as shown in FIG.9); a corresponding relation between a real-time temperature in the air outlet hole and a pre-heating power of the air intake auxiliary heating member (as shown in FIG. 10); a corresponding relation between a target temperature of the tobacco liquid and a target temperature in the air outlet hole (as shown in FIG.11); a corresponding relation between a target temperature in the air outlet hole and a pre-heating power of the heating member (as shown in FIG. 12); a corresponding relation between a target temperature in the air outlet hole, a target temperature of the tobacco liquid and a target temperature of the heating member (as shown in FIG. 13); and a corresponding relation between a temperature difference between the air inlet hole and the air outlet hole and a pre-heating power of the air intake auxiliary heating member (as shown in FIG.14). It should be noted that, the value of the above pre-heating control information is only used as the value of one reference embodiment. In alternative embodiments, other values can be used instead. It can be understood that, the presentation form of the pre-heating control information is not limited herein, for example, it can be readable storage information such as a table, a mapping relation or a picture.

It should be noted that, the temperature in the air inlet hole and the temperature in the air outlet hole indicate the air temperature in the air inlet hole and the air temperature in the air outlet hole.

In the embodiment, during the pre-heating process, the temperature of the corresponding component (for example, the heating member, the tobacco liquid auxiliary heating member and the air intake auxiliary heating member) of the atomizer and the temperature at the corresponding position (for example, the air inlet hole, the air outlet hole and the atomizing chamber) are detected in real-time, so that the atomizer is controlled to pre-heat according to the detected temperatures and the pre-heating control information.

For convenience, the following pre-heating control information is taken by a pre-heating control table as an example.

Specifically, in a specific embodiment, as shown in FIG. 5, the pre-heating control table includes a corresponding relation between a temperature of the heating member and a pre-heating action. The main controller controls the heating member to perform pre-heating when the temperature of the heating member is less than a preset temperature of 45 degrees. Further, as shown in FIG. 8, a pre-heating power is adjusted according to a real-time temperature of the heating member until the temperature of the heating member is equal to or greater than the preset temperature of 45 degrees. Then, the current pre-heating power is maintained to perform the pre-heating.

In a specific embodiment, the pre-heating control table is shown in FIG. 8, the preset target temperature of the heating member is 45 degrees. Before pre-heating, when the initial temperature of the heating member is less than 30 degrees, a pre-heating power of the heating member is 100 watts. When the temperature of the heating member rises to 33 degrees, the pre-heating power is decreased from 100 watts to 80 watts. When the temperature of the heating member increases by 3 degrees and rises to 36 degrees, the pre-heating power is decreased from 80 watts to 62 watts. When the temperature of the heating member further increases by 43 degrees and rises to 39 degrees, the pre-heating power is decreased from 62 watts to 50 watts. When the temperature of the heating member rises to 42 degrees, the pre-heating power is decreased from 50 watts to 40 watts. When the temperature of the heating member rises to the preset temperature of 45 degrees, the heating member stops work. The corresponding relation between the real-time temperature of the heating member and the pre-heating power of the heating member can be a linear relation, and can also be a non-linear relation. In the embodiment as shown in FIG. 8, the corresponding relation between the real-time temperature of the heating member and the pre-heating power of the heating member is a non-linear relation. In the embodiment, when the temperature of the heating member is increased gradually, the pre-heating power is decreased gradually and the decreasing gradient decreases. In one embodiment not shown, when the temperature of the heating member ranges from less than 25 degrees to reach 36 degrees, the pre-heating power of the heating member maintains at 100 watts; when the temperature of the heating member reaches 36 degrees, the pre-heating power of the heating member is decreased from 80 watts to 60 watts; when the temperature of the heating member further increases by 3 degrees and rises to 39 degrees, the pre-heating power is decreased from 60 watts to 40 watts; when the temperature of the heating member rises to the preset temperature of 45 degrees, the heating member stops to heat.

In a specific embodiment, as shown in FIG. 6, the pre-heating control table includes a corresponding relation between a temperature of the tobacco liquid and a pre-heating action. When the temperature of the tobacco liquid is less than a preset temperature of 40 degrees, the main controller controls the tobacco liquid auxiliary heating member to pre-heat the tobacco liquid in the liquid storage assembly. Further, as shown in FIG. 9, the pre-heating power of the tobacco liquid auxiliary heating member is adjusted according to the real-time temperature of the tobacco liquid until the temperature of the tobacco liquid is equal to or greater than the preset temperature of 50 degrees. Then, the current pre-heating power is maintained to perform the pre-heating.

As shown in FIG. 9, before pre-heating, when the initial temperature of the tobacco liquid is less than 35 degrees, a pre-heating power of the tobacco liquid auxiliary heating member is 100 watts. When the temperature of the tobacco liquid increases by 5 degrees and rises to 35 degrees, the pre-heating power is decreased from 100 watts to 80 watts. When the temperature of the tobacco liquid further increases by 5 degrees and rises to 40 degrees, the pre-heating power is decreased from 80 watts to 60 watts, and so on. When the temperature of the tobacco liquid further rises to the preset temperature of 50 degrees, the tobacco liquid auxiliary heating member stops pre-heating. When the temperature of the tobacco liquid is increased gradually, the pre-heating power of the tobacco liquid auxiliary heating member is decreased gradually. The corresponding relation between the real-time temperature of the tobacco liquid and the pre-heating power of the tobacco liquid auxiliary heating member can be a linear relation, and can also be a non-linear relation. In the embodiment as shown in FIG. 9, the corresponding relation between the real-time temperature of the tobacco liquid and the pre-heating power of the tobacco liquid auxiliary heating member is a linear relation.

In a specific embodiment, as shown in FIG. 7, the pre-heating control table includes a corresponding relation between a temperature in the air outlet hole and a pre-heating action. When the temperature in the air outlet hole is less than or equal to a preset temperature of 40 degrees, the main controller controls the air intake auxiliary heating member to pre-heat the air entering the atomizer. Further, the pre-heating power of the air intake auxiliary heating member is adjusted according to the real-time temperature in the air outlet hole until the temperature in the air outlet hole is equal to or greater than the preset temperature of 40 degrees. Then, the current pre-heating power is maintained to perform the pre-heating.

As shown in FIG. 10, before pre-heating, when the initial temperature in the air outlet hole is less than or equal to 25 degrees, the pre-heating power of the air intake auxiliary heating member is 100 watts. When the temperature in the air outlet hole rises to 25 degrees, the pre-heating power is decreased from 100 watts to 80 watts. When the temperature in the air outlet hole further increases by 5 degrees and rises to 30 degrees, the pre-heating power is decreased from 80 watts to 60 watts. When the temperature in the air outlet hole further rises to 35 degrees, the pre-heating power is decreased from 60 watts to 40 watts. When the temperature in the air outlet hole further rises to 40 degrees, the air intake auxiliary heating member stops pre-heating. When the temperature in the air outlet hole is increased gradually, the pre-heating power of the air intake auxiliary heating member is decreased gradually. In the embodiment, the corresponding relation of the temperature difference between the real-time temperature in the air outlet hole and the preset temperature relative to the pre-heating power of the air intake auxiliary heating member can be a linear relation, and can also be a non-linear relation. In the embodiment as shown in FIG. 10, the corresponding relation of the temperature difference between the real-time temperature in the air outlet hole and the preset temperature relative to the pre-heating power of the air intake auxiliary heating member is a non-linear relation.

In a specific embodiment, as shown in FIG. 7, the pre-heating control table includes a corresponding relation between a temperature in the air outlet hole and a pre-heating action. The main controller adjusts the working state of the air intake auxiliary heating member according to the temperature in the air outlet hole. When the temperature in the air outlet hole is greater than a preset temperature of 40 degrees, the air intake auxiliary heating member is not started so that the air intake auxiliary heating member remains in the non-working state. When the temperature in the air outlet hole is less than the preset temperature of 40 degrees, the air intake auxiliary heating member is started to pre-heat the air entering the atomizer. Further, the pre-heating power of the air intake auxiliary heating member is adjusted according to a temperature difference between the air inlet hole and the air outlet hole, until the temperature in the air outlet hole is equal to or greater than the preset temperature of 40 degrees. Then, the current pre-heating power is maintained to perform the pre-heating.

In a specific embodiment, as shown in FIG. 14, a corresponding relation of a temperature difference between the air inlet hole and the air outlet hole relative to a pre-heating power of the air intake auxiliary heating member is shown. The smaller the temperature difference, the smaller the pre-heating power. For example, the temperature difference of 0 degree corresponds to the pre-heating power of 100 watts, the temperature difference of 5 degrees corresponds to the pre-heating power of 80 watts, the temperature difference of 10 degrees corresponds to the pre-heating power of 60 watts, the temperature difference of 15 degrees corresponds to the pre-heating power of 40 watts, and the temperature difference of greater than 20 degrees corresponds to the pre-heating power of 20 watts. The corresponding relation between the temperature difference between the air inlet hole and the air outlet hole and the pre-heating power of the air intake auxiliary heating member can be a linear relation, and can also be a non-linear relation. In the embodiment, it is a linear relation. In the embodiment, because the pre-heating power is controlled by the temperature difference, not only the temperature change of the air is uniform and the inhalation experience is improved, but also an energy saving effect is achieved.

In a specific embodiment, as shown in FIG. 11, the pre-heating control table includes a corresponding relation between a target temperature of the tobacco liquid and a target temperature in the air outlet hole. In one embodiment, the user selects one of the target temperature of the tobacco liquid and the target temperature in the air outlet hole via the input module, then the main controller invokes the pre-heating control table to obtain the temperature information of the other one, and controls the tobacco liquid auxiliary heating member and the air intake auxiliary heating member to perform pre-heating, until each of the temperature of the tobacco liquid and the temperature in the air outlet hole reaches its target temperature.

It can be understood that, selecting one of the target temperature of the tobacco liquid and the target temperature in the air outlet hole by the user can also be configured automatically by the main controller, or can be set when leaving the factory.

In a specific embodiment, as shown in FIG. 12, the pre-heating control table includes a corresponding relation between a pre-heating power of the heating member, a target temperature of the tobacco liquid and a target temperature in the air outlet hole. In the embodiment, when the user selects 40 degrees as the target temperature of the tobacco liquid via the input module, the main controller invokes the pre-heating control table and automatically configures the target temperature in the air outlet hole at 35 degrees according to the pre-heating control table, and the pre-heating power of the heating member is kept at 80 watts. Then, the tobacco liquid auxiliary heating member and the air intake auxiliary heating member perform a pre-heating work at the same time. If the temperature in the air outlet hole reaches 35 degrees first, the temperature in the air inlet hole is controlled to be constant, the tobacco liquid auxiliary heating member continues to work until the temperature of the tobacco liquid reaches 40 degrees. Or, if the temperature of the tobacco liquid reaches 40 degrees first, the temperature of the tobacco liquid is controlled to be constant, the air intake auxiliary heating member continues to work until the temperature in the air outlet hole reaches 35 degrees, then the air intake auxiliary heating member stops heating. During the pre-heating, the user can select a target temperature via the input module, wherein the target temperature can be one of the temperature in the air outlet hole or the temperature of the tobacco liquid; then, the target temperature of the other one can be acquired directly according to the pre-heating control table, the main controller invokes the pre-heating control table and controls the auxiliary heating members to perform pre-heating work according to the pre-heating control table, causing the temperature in the air inlet hole and the temperature of the tobacco liquid to reach the preset target temperature one by one.

It should be noted that, in the embodiment, the user is firstly required to select one of the pre-heating temperature in the air outlet hole and the pre-heating temperature of the tobacco liquid, in alternative embodiments, the pre-heating temperature in the air outlet hole or the pre-heating temperature of the tobacco liquid is configured when leaving the factory, or is assigned by the main controller. The main controller actively invokes the pre-heating control table directly, and controls the air intake auxiliary heating member and the tobacco liquid auxiliary heating member to work according to the pre-heating control table, so that it does not require the user to set.

In a specific embodiment, as shown in FIG. 13, the pre-heating control table includes a corresponding relation between a target temperature in the air outlet hole, a target temperature of the tobacco liquid and a target temperature of the heating member. In one embodiment, the user firstly selects one of the three temperatures: the target temperature in the air outlet hole, the target temperature of the tobacco liquid and the target temperature of the heating member. Then, the main controller invokes the other two temperatures from the pre-heating control table, and controls the air intake auxiliary heating member, the tobacco liquid auxiliary heating member and the heating member to perform pre-heating at the same time, and controls the temperature of the tobacco liquid, the temperature of the heating member and the temperature in the air outlet hole to reach the preset temperature in the pre-heating control table one by one, or at the same time.

For example, if a target temperature of the tobacco liquid selected by the user is 45 degrees, and before pre-heating, the actual temperature of the tobacco liquid is 25 degrees, the actual temperature in the air outlet hole is 20 degrees, the actual temperature of the heating member is 30 degrees, then the main controller invokes the pre-heating control table and obtains that the target temperature in the air outlet hole is 40 degrees and the target temperature of the heating member is 47 degrees. Then, the main controller controls the air intake auxiliary heating member, the heating member and the tobacco liquid auxiliary heating member to perform pre-heating. When the actual temperature of the tobacco liquid reaches the target temperature of the tobacco liquid, i.e., 45 degrees, the tobacco liquid auxiliary heating member stops heating; subsequently, when the temperature in the air outlet hole reaches the target value of 40 degrees, the air intake auxiliary heating member stops heating; finally, when the temperature of the heating member reaches 47 degrees, the heating member stops heating. When the user selects a target temperature of the heating member or a target temperature of the heating member via the input module, the pre-heating work of the electronic cigarette is similar to that of selecting a target temperature of the tobacco liquid, which is not described herein again. It can be understood that, the selecting process by the user can be replaced by the main controller's distributing or the factory setting.

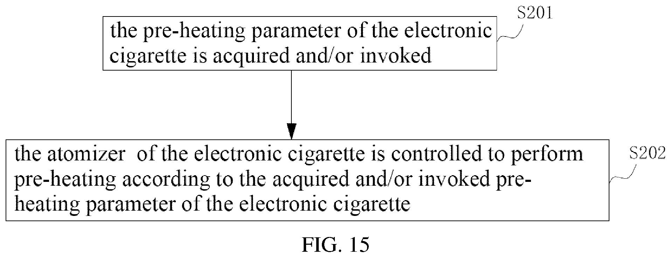

On basis of aforementioned electronic cigarette, in the method for pre-heating the electronic cigarette provided by the embodiment, it can include the following steps as shown in FIG. 15:
In step S201, acquiring and/or invoking the pre-heating parameter of the electronic cigarette;
In step S202, controlling the atomizer of the electronic cigarette to perform pre-heating according to the acquired and/or invoked pre-heating parameter of the electronic cigarette.

In one embodiment, the pre-heating parameter includes pre-heating power/voltage, pre-heating time period and/or pre-heating control table of the electronic cigarette. In one embodiment, acquiring the pre-heating parameter of the electronic cigarette includes acquiring the pre-heating parameter by the main controller when the pre-heating parameter is inputted by the user through the input module; invoking the pre-heating parameter of the electronic cigarette includes invoking the preset pre-heating control information by the main controller; acquiring and invoking the pre-heating parameter of the electronic cigarette includes acquiring a portion of the pre-heating parameter inputted by the user through the input module and invoking the pre-heating control information by the main controller to obtain the other portion of the pre-heating parameter.

In one embodiment, the pre-heating control information includes a corresponding relation between a target temperature of the tobacco liquid and a target temperature in the air outlet hole, the pre-heating method further includes:
Determining a target temperature firstly, wherein the target temperature is one of the target temperature of the tobacco liquid and the target temperature in the air outlet hole, the main controller acquires the other one of the target temperature of the tobacco liquid and the target temperature in the air outlet hole according to the pre-heating control information, and controls the tobacco liquid auxiliary heating member and the air intake auxiliary heating member to heat, until each of the temperature in the air outlet hole and the temperature of the tobacco liquid reaches the target temperature.

In one embodiment, the pre-heating control information includes a corresponding relation between a target temperature in the air outlet hole, a target temperature of the tobacco liquid and a target temperature of the heating member. The pre-heating method further includes:
Determining a target temperature firstly, wherein the target temperature is one of the three temperatures: the target temperature in the air outlet hole, the target temperature of the tobacco liquid and the target temperature of the heating member, and the main controller invokes the other two target temperatures according to the pre-heating control information.

Or, determining two target temperatures firstly, wherein the two target temperatures are two of the three temperatures: the target temperature in the air outlet hole, the target temperature of the tobacco liquid and the target temperature of the heating member, and the main controller invokes the other one target temperature according to the pre-heating control information.

The main controller then controls the air intake auxiliary heating member, the tobacco liquid auxiliary heating member and the heating member to perform pre-heating, and controls the temperature of the tobacco liquid, the temperature of the heating member and the temperature in the air outlet hole to reach the preset target temperature in the pre-heating control information one by one, or at the same time.

It can be understood that, the aforementioned pre-heating method can serve as a specific embodiment for acquiring and invoking the pre-heating parameter of the electronic cigarette.

It can be understood that, determining a target temperature indicates that the user can select a pre-heating temperature by the input module or can directly input a target temperature by the input module. Optionally, when the user inputs directly by the input module, the target temperature has a maximum value and/or a minimum value, if the temperature value inputted by the user is greater than the maximum value or less than the minimum value, the input is invalid, the main controller gives a prompt message. Optionally, the pre-heating control information not corresponds to the value inputted by the user one by one, for example, the pre-heating temperature inputted to the main controller may in the range from 20 degrees to 40 degrees, and the pre-heating temperature in the pre-heating control information is divided into four stages: 20 degrees to 25 degrees, 25 degrees to 30 degrees, 30 degrees to 35 degrees, and 35 degrees to 40 degrees. When the user inputs 28 degrees, it falls into the second stage, i.e., 25 degrees to 30 degrees, the main controller accordingly determines that one of a target temperature in the air outlet hole, a target temperature of the tobacco liquid and a target temperature of the heating member is in the second stage, and then invokes the other target temperatures.

In a specific embodiment, before acquiring and/or invoking the pre-heating parameter of the electronic cigarette, the method further includes initializing the electronic cigarette.

In a specific embodiment, an air inlet temperature sensor, an air outlet temperature sensor and/or a tobacco liquid temperature sensor are included. The air inlet temperature sensor, the air outlet temperature sensor and the tobacco liquid temperature sensor are connected to the main controller via a signal connection.

In a specific embodiment, an auxiliary heating member for pre-heating is included.

In a specific embodiment, the auxiliary heating member includes an air intake auxiliary heating member connected to the main controller.

In a specific embodiment, the auxiliary heating member includes a tobacco liquid auxiliary heating member connected to the main controller.

In a specific embodiment, the pre-heating control information includes at least one of the following corresponding relations: a corresponding relation between a temperature of the heating member and a pre-heating action; a corresponding relation between a temperature of the tobacco liquid and a pre-heating action; a corresponding relation between a temperature in the air outlet hole and a pre-heating action; a corresponding relation between a real-time temperature of the heating member and a pre-heating power of the heating member; a corresponding relation between a target temperature of the tobacco liquid and a target temperature in the air outlet hole; a corresponding relation between a target temperature in the air outlet hole, a target temperature of the tobacco liquid and a pre-heating power of the heating member; and a corresponding relation between a preset temperature in the air outlet hole, a preset temperature of the tobacco liquid and a target temperature of the heating member.

In a specific embodiment, the pre-heating control information includes a corresponding relation between a temperature of the tobacco liquid and a pre-heating power of the tobacco liquid auxiliary heating member.

In a specific embodiment, the pre-heating control information includes a corresponding relation between a temperature in the air outlet hole and a pre-heating power of the air intake auxiliary heating member.

In a specific embodiment, the pre-heating control information includes a corresponding relation between a temperature difference between the air inlet hole and the air outlet hole and a pre-heating power of the air intake auxiliary heating member.

Controlling the atomizer of the electronic cigarette to perform pre-heating according to the acquired and/or invoked pre-heating parameter of the electronic cigarette includes: when the main controller controls the atomizer of the electronic cigarette to perform pre-heating according to the acquired and/or invoked pre-heating parameter of the electronic cigarette, the pre-heating way is at least one of the following three ways: controlling the air intake auxiliary heating member to pre-heat the air entering the atomizer; controlling the tobacco liquid auxiliary heating member to pre-heat the tobacco liquid in the liquid storage assembly, and controlling the heating member to pre-heat the tobacco liquid in the atomizing head.

Further, when the preset pre-heating parameter invoked by the main controller is the pre-heating control information, the main controller controls at least one of the air intake auxiliary heating member, the tobacco liquid auxiliary heating member and the heating member to perform the pre-heating according the pre-heating control information.

In a specific embodiment, after controlling the atomizer of the electronic cigarette to perform pre-heating, the step S202 further includes detecting the input module whether there is an input of inhalation operation, if there is an input of inhalation operation, the electronic cigarette is started for inhalation.

In the embodiment, before smoking using the electronic cigarette, the tobacco liquid of the electronic cigarette is pre-heated, and a real-time temperature of corresponding component of the atomizer or a real-time temperature at corresponding position is detected, the pre-heating control strategy is adjusted according to the detected temperature, and the atomizer is controlled to pre-heat according to the pre-heating control strategy, until the temperature of the corresponding components or the temperature at the corresponding positions reaches the target temperature, so that the flavor of the atomized tobacco liquid is effectively improved and the user experience is enhanced.

It should be noted that in this description, the terms "comprising", "including" or any other variations thereof are intended to cover non-exclusive inclusion, so that a process, method, article or device including a series of elements includes not only those elements, but also other elements not explicitly listed, or also includes the elements inherent in the process, method, article or device. Without further restrictions, the statement "include a..." does not exclude the existence of other identical elements in the process, method, article or device including the element.

The embodiments described above are merely preferred embodiments, but not intended to limit the disclosure. Any equivalent structure or equivalent process made by using the contents of the description and the accompanying drawings of the disclosure, or directly or indirectly used in other related technical fields, are included in the scope of patent protection of the disclosure.

## Claims

1. An electronic cigarette, comprising:
a battery module;
an atomizer; and
a main controller connected to the battery module and the atomizer;
wherein the main controller is configured to acquire a pre-heating parameter via an input module for receiving user input instruction, and/or invoke a preset pre-heating parameter, the main controller is further configured to control the atomizer to perform pre-heating according to the pre-heating parameter.

2. The electronic cigarette according to claim **1,** wherein the user input instruction comprises user operation instruction and data input instruction, the user operation instruction comprises initialization instruction, pre-heating instruction and inhalation instruction of the electronic cigarette, the data input instruction comprises inputted pre-heating parameter, the main controller performs an initialization of the electronic cigarette after receiving the initialization instruction, controls the atomizer to perform pre-heating after receiving the pre-heating instruction, and starts the electronic cigarette for inhalation after receiving the inhalation instruction.

3. The electronic cigarette according to claim **1,** wherein the pre-heating parameter comprises pre-heating power/voltage, and/or, pre-heating time; the pre-heating power/voltage is any value within the range of the output power/voltage of the electronic cigarette, or is any setting among multiple pre-heating power/voltage settings; the pre-heating time is any value within the range of a preset time period, or is any setting among multiple pre-heating time settings.

4. The electronic cigarette according to claim **1,** wherein the main controller is further configured to save the pre-heating parameter of the electronic cigarette inputted through the input module; when the main controller does not receive an input of the pre-heating parameter, the previously saved pre-heating parameter is invoked as the current pre-heating parameter of the electronic cigarette by the main controller.

5. The electronic cigarette according to claim **1,** wherein the atomizer of the electronic cigarette comprises a liquid storage assembly and an atomizing assembly, a liquid storage chamber is provided in the liquid storage assembly, the atomizing assembly comprises an atomizing head, a heating member and an atomizing chamber are provided in the atomizing head, the atomizing assembly forms an air intake passage outside the atomizing head, the air intake passage is in communication with the atomizing chamber.

6. The electronic cigarette according to claim **1,** wherein the preset pre-heating parameter comprises pre-heating control information of the electronic cigarette, the pre-heating control information comprises a corresponding relation between a temperature of a heating member and a pre-heating action, when the temperature of the heating member is less than a preset temperature, the main controller controls the heating member to pre-heat until the temperature of the heating member is equal to or greater than the preset temperature.

7. The electronic cigarette according to claim **5,** wherein the main controller is further configured to adjust a pre-heating power according to a temperature difference between a real-time temperature of the heating member and the preset temperature.

8. The electronic cigarette according to claim 5, wherein the air intake passage is provided with an air intake auxiliary heating member for heating the air in the air intake passage, the air intake passage comprises an air inlet hole and an air outlet hole, the air inlet hole is provided with an air inlet temperature sensor for detecting the air temperature in the air inlet hole, and the air outlet hole is provided with an air outlet temperature sensor for detecting the air temperature in the air outlet hole.

9. The electronic cigarette according to claim **8,** wherein the preset pre-heating parameter comprises pre-heating control information of the electronic cigarette, the pre-heating control information comprises a corresponding relation between a temperature in the air outlet hole and a pre-heating action, when the temperature in the air outlet hole is less than a preset temperature, the main controller controls the air intake auxiliary heating member to pre-heat the air entering the atomizer until the temperature in the air outlet hole is equal to or greater than the preset temperature.

10. The electronic cigarette according to claim **8,** wherein the pre-heating control information comprises a corresponding relation between a temperature difference between the air inlet hole and the air outlet hole and a pre-heating power of the air intake auxiliary heating member, when the temperature difference between the air inlet hole and the air outlet hole is decreased, the pre-heating power is also decreased.

11. The electronic cigarette according to claim **5,** wherein the liquid storage chamber is provided with a tobacco liquid auxiliary heating member for heating the tobacco liquid and a tobacco liquid temperature sensor for detecting the temperature of the tobacco liquid.

12. The electronic cigarette according to claim **11,** wherein the preset pre-heating parameter comprises pre-heating control information of the electronic cigarette, the pre-heating control information comprises a corresponding relation between a temperature of the tobacco liquid and a pre-heating action, when the temperature of the tobacco liquid is less than a preset temperature, the main controller controls the tobacco liquid auxiliary heating member to pre-heat the tobacco liquid in the liquid storage assembly until the temperature of the tobacco liquid is equal to or greater than the preset temperature of the tobacco liquid.

13. A method for pre-heating an electronic cigarette, comprising:
acquiring and/or invoking a pre-heating parameter of the electronic cigarette; and
controlling an atomizer of the electronic cigarette to perform pre-heating according to the acquired and/or invoked pre-heating parameter of the electronic cigarette.

14. The method for pre-heating the electronic cigarette according to claim **13,** wherein in the step of acquiring and/or invoking a pre-heating parameter of the electronic cigarette, the pre-heating parameter comprises pre-heating power/voltage, and/or, pre-heating time.

15. The method for pre-heating the electronic cigarette according to claim **14,** wherein the electronic cigarette comprises a main controller and an input module connected to the main controller; acquiring a pre-heating parameter of the electronic cigarette comprises acquiring the pre-heating parameter by the main controller when the pre-heating parameter is inputted through the input module; invoking a pre-heating parameter of the electronic cigarette comprises invoking a preset pre-heating control information by the main controller; acquiring and invoking a pre-heating parameter of the electronic cigarette comprises acquiring a portion of the pre-heating parameter inputted through the input module and invoking the pre-heating control information by the main controller to obtain the other portion of the pre-heating parameter.

16. The method for pre-heating the electronic cigarette according to claim **13,** wherein the atomizer of the electronic cigarette comprises a liquid storage assembly and an atomizing assembly, a liquid storage chamber is provided in the liquid storage assembly, the atomizing assembly comprises an atomizing head, a heating member and an atomizing chamber are provided in the atomizing head, the atomizing assembly forms an air intake passage outside the atomizing head, the air intake passage is in communication with the atomizing chamber, the air intake passage is provided with an air intake auxiliary heating member for heating the air in the air intake passage, the air intake passage comprises an air inlet hole and an air outlet hole, the air inlet hole is provided with an air inlet temperature sensor for detecting the real-time air temperature in the air inlet hole, the air outlet hole is provided with an air outlet temperature sensor for detecting the real-time air temperature in the air outlet hole, the liquid storage chamber is provided with a tobacco liquid auxiliary heating member for heating the tobacco liquid and a tobacco liquid temperature sensor for detecting the real-time temperature of the tobacco liquid.

17. The method for pre-heating the electronic cigarette according to claim **14,** wherein the pre-heating control information comprises at least one of the following corresponding relations: a corresponding relation between a temperature of the heating member and a pre-heating action; a corresponding relation between a temperature of the tobacco liquid and a pre-heating action; a corresponding relation between a temperature in the air outlet hole and a pre-heating action; a corresponding relation between a real-time temperature of the heating member and a pre-heating power of the heating member; a corresponding relation between a real-time temperature of the tobacco liquid and a pre-heating power of the tobacco liquid auxiliary heating member; a corresponding relation between a real-time temperature in the air outlet hole and a pre-heating power of the air intake auxiliary heating member; a corresponding relation between a target temperature of the tobacco liquid and a target temperature in the air outlet hole; a corresponding relation between a target temperature in the air outlet hole, a target temperature of the tobacco liquid and a pre-heating power of the heating member; a corresponding relation between a target temperature in the air outlet hole, a target temperature of the tobacco liquid and a target temperature of the heating member; and a corresponding relation between a temperature difference between the air inlet hole and the air outlet hole and a pre-heating power of the air intake auxiliary heating member.

18. The method for pre-heating the electronic cigarette according to claim **13,** wherein after receiving an initialization instruction of the electronic cigarette, the main controller automatically invokes the pre-heating parameter of the electronic cigarette and controls the atomizer of the electronic cigarette to pre-heat.

19. The method for pre-heating the electronic cigarette according to claim **16,** wherein the pre-heating control information comprises a corresponding relation between a target temperature of the tobacco liquid and a target temperature in the air outlet hole, the pre-heating method further comprises:
determining a target temperature firstly, wherein the target temperature is one of the target temperature of the tobacco liquid and the target temperature in the air outlet hole;
acquiring, by the main controller, the other one of the target temperature of the tobacco liquid and the target temperature in the air outlet hole according to the pre-heating control information; and
controlling the tobacco liquid auxiliary heating member and the air intake auxiliary heating member to heat, until each of the temperature in the air outlet hole and the temperature of the tobacco liquid reaches the target temperature.

20. The method for pre-heating the electronic cigarette according to claim **16,** wherein the pre-heating control information comprises a corresponding relation between a target temperature in the air outlet hole, a target temperature of the tobacco liquid and a target temperature of the heating member, the pre-heating method further comprises:
determining a target temperature firstly, wherein the target temperature is one of the three temperatures: the target temperature in the air outlet hole, the target temperature of the tobacco liquid and the target temperature of the heating member; and invoking, by the main controller, the other two temperatures by the main controller according to the pre-heating control information;
or, determining two target temperatures firstly, wherein the two target temperatures are two of the three temperatures: the target temperature in the air outlet hole, the target temperature of the tobacco liquid and the target temperature of the heating member; and invoking, by the main controller, the other one target temperature, according to the pre-heating control information; and
controlling, by the main controller, the air intake auxiliary heating member, the tobacco liquid auxiliary heating member and the heating member to perform pre-heating, and controlling the temperature of the tobacco liquid, the temperature of the heating member and the temperature in the air outlet hole to reach the preset target temperature in the pre-heating control information one by one, or at the same time.
